# DEMANDE DE BREVET EUROPEEN

(11) **EP 4 763 573 A1**
(43) Date de publication de la demande: **24.06.2026**
(21) Numéro de dépôt: 25212062.1
(22) Date de dépôt: 29.10.2025
(51) Int. Cl.: B60K 35/10, B60J 5/04, B60R 13/02

(54) **MODULE LÈVE-VITRE POUR UN VÉHICULE AUTOMOBILE**

(30) Priorité: 17.12.2024 FR 2414293
(71) Demandeur: Stellantis Auto SAS, 78300 Poissy (FR)
(72) Inventeur: LEMBERT, Patricia, 78114 MAGNY LES HAMEAUX (FR); PERU, Marc, 92290 CHATENAY MALABRY (FR); COULOT, Mickael, 86300 CHAUVIGNY (FR); CERDAN, Daniel, 45400 FLEURY LES AUBRAIS (FR)
(74) Mandataire: BCIP

(57) **Abrégé**

L'invention concerne un module lève-vitre (1) pour un véhicule automobile, le module de commande comportant un garnissage (11) de porte latérale fixé solidairement à une doublure de porte (10) de ladite porte latérale, le garnissage (11) comportant un panneau d'habillage et une plateforme (112) qui s'étend en saillie depuis le panneau d'habillage, la plateforme (112) logeant une platine de commande (12) intégrant un bouton de contrôle (13) de la vitre de la porte latérale, ladite platine de commande (12) comportant des moyens de fixation sur la plateforme (112). Selon l'invention, le module lève-vitre (1) comporte un organe de retenue (14) de la platine de commande (12) dans le réceptacle de la plateforme (112), ledit organe de retenue (14) étant du type élastiquement déformable de sorte à être mis en tension et en appui contre une butée de la platine de commande (12) en cas de choc latéral et afin de la retenir sur la plateforme (112).

## Description

[Le contexte technique de la présente invention est celui des éléments d'habillage des panneaux de portes latérales d'un véhicule automobile, et notamment ceux relatifs à la sécurisation de l'habitacle et de ses occupants en cas de chocs latéraux. Plus particulièrement, l'invention a trait à un module lève-vitre pour un véhicule automobile.

Dans l'état de la technique, on connait des modules lève-vitre équipant des portes latérales de véhicules automobiles, de tels modules permettant de disposer un certain nombre de boutons de commandes destinés à contrôler certains équipements de l'habitacle et/ou de la porte latérale. En particulier, on connait de tels modules lève-vitre dont les boutons de commande permettent de contrôler la remontée ou la descente d'une vitre latérale intégrée dans la porte latérale, et/ou encore le contrôle du verrouillage des portes latérales du véhicule automobile, et/ou encore le réglage d'un siège électrique avant, par exemple.

De tels boutons de commande sont disposés sur une platine de commande qui est fixée solidairement à une plateforme d'un garnissage de la porte latérale, ledit garnissage formant une doublure intérieure de la porte latérale. Plus particulièrement, la plateforme s'étend en saillie vers l'intérieur de l'habitacle, de sorte à former un rebord ou un accoudoir pour le passager assis à côté. Une telle platine de commande connue est solidaire de la plateforme par l'intermédiaire de crochets de fixation, du type par exemple de clips de fixation qui collaborent avec des éléments de retenue situés en regard, par encliquetage ou par crochetage.

Un inconvénient connu de ces modules lève-vitre connus réside dans le fait que, en cas de choc latéral contre la porte latérale supportant un tel module lève-vitre, les contraintes mécaniques consécutives du chocs latérales qui se propagent dans la doublure de la porte latérale compriment la platine lève vitre et font sauter les clips de fixation, ladite platine de commande se désolidarisant de la porte latérale. Plus particulièrement, on observe que le profil d'intrusion de la doublure de porte latérale vers l'intérieur de l'habitacle introduit des déformations de la plateforme à laquelle la platine de commande est attachée. Ces déformations introduisent alors des contraintes au niveau des clips de fixation qui peuvent dépasser les forces de retenue des clips de fixation dans les éléments de retenue situés en regard.

Bien entendu, cette situation n'est pas souhaitée, car elle peut notamment introduire des blessures supplémentaires aux occupants de l'habitacle, par la projection de la platine de commande ainsi détachée de sa plateforme.

La présente invention a pour objet de proposer un nouveau module lève-vitre afin de répondre au moins en grande partie aux problèmes précédents et de conduire en outre à d'autres avantages.

Un autre but de l'invention est d'éviter que la platine de commande d'un tel module lève-vitre ne s'escamote en cas de choc latéral.

Un autre but de l'invention est de proposer un tel module lève-vitre qui soit économique et facile à implémenter.

Selon un premier aspect de l'invention, on atteint au moins l'un des objectifs précités avec un module lève-vitre pour un véhicule automobile, le module de commande comportant :

- un garnissage de porte latérale fixé solidairement à une doublure de porte de ladite porte latérale, le garnissage comportant un panneau d'habillage de la doublure de porte et une plateforme qui s'étend en saillie depuis le panneau d'habillage, la plateforme comportant un réceptacle formant un logeant pour recevoir un mécanisme de contrôle d'une vitre de la porte latérale ;

- une platine de commande logée dans le réceptacle de la plateforme, la platine de commande intégrant un bouton de contrôle de la vitre de la porte latérale, ladite platine de commande comportant des moyens de fixation sur la plateforme ;

- un organe de retenue de la platine de commande dans le réceptacle de la plateforme, ledit organe de retenue étant du type élastiquement déformable et s'étendant depuis le panneau d'habillage et contre la platine de commande, en travers du réceptacle.

Dans le contexte de la présente invention, un axe longitudinal, un axe latéral et un axe vertical sont définis relativement au véhicule automobile sur lequel le module lève-vitre conforme au premier aspect de l'invention est destiné à être monté. Plus particulièrement, l'axe transversal s'entend comme une direction prise entre un côté latéral du véhicule automobile et un côté latéral opposé dudit véhicule automobile. En d'autres termes, l'axe transversal s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal. En outre, l'axe longitudinal s'entend comme étant pris le long d'une direction qui s'étend d'avant en arrière ou d'arrière en avant du véhicule automobile. L'axe longitudinal est perpendiculaire à l'axe transversal. Les adjectifs frontaux, avant et arrière font référence à cet axe longitudinal. Enfin, l'axe vertical s'entend comme étant pris le long d'un axe qui s'étend depuis les roues du véhicule automobile et vers le pavillon de toit dudit véhicule automobile, ou inversement, l'axe vertical étant simultanément perpendiculaire à l'axe transversal et à l'axe longitudinal. Les adjectifs dessus et dessous, ou inférieur et supérieur font référence à cet axe vertical.

Dans le contexte de la présente invention, la doublure de porte forme un élément structurel de la porte latérale. La doublure de porte est montée articulée par rapport à un châssis du véhicule automobile. La doublure de porte est formée de panneaux métalliques assemblés sur un élément de structure de la porte latérale.

Dans le contexte de la présente invention, le garnissage est un élément d'habillage intérieur de la doublure de porte. En d'autres termes, le garnissage forme un panneau d'habillage de la doublure de porte. Le garnissage est formé de matériaux comportant du plastique par exemple. Le garnissage de la doublure de porte comporte le panneau d'habillage - qui forme une paroi d'élongation verticale majoritairement et qui coiffe la doublure de porte vers l'intérieur de l'habitacle, ainsi que la plateforme qui s'étend en saillie depuis le panneau d'habillage. Plus particulièrement, la plateforme s'étend en saillie vers l'intérieur de l'habitacle, de sorte à former un rebord ou un accoudoir pour le passager assis à côté. La plateforme est solidaire du panneau d'habillage. La plateforme forme ainsi une surface d'appui sensiblement horizontale lorsque le module lève-vitre est monté sur un véhicule automobile. En outre, la plateforme délimite un logement pour accueillir les éléments techniques de bouton(s) de commande, tels qu'un bouton de commande. De tels éléments techniques comportent notamment des éléments mécaniques et/ou électriques qui permettent au bouton de commande de fonctionner.

Dans le contexte de la présente invention, la platine de commande forme un organe de fermeture du réceptacle logeant les éléments mécaniques et/ou électriques des boutons de commande associés au module lève-vitre. Dans le contexte de l'invention, la platine de commande supporte un mécanisme d'actionnement du bouton de commande, tel que par exemple un maneton, un mécanisme à bascule, à rotation ou à pivotement notamment. Ce mécanisme d'actionnement est susceptible d'être manipulé par le passager. La platine de commande est solidaire de la plateforme par l'intermédiaire de crochets de fixation, du type par exemple de clips de fixation qui collaborent avec des éléments de retenue situés en regard, par encliquetage ou par crochetage.

Dans le contexte de la présente invention, l'organe de retenue de la platine de commande dans le réceptacle de la plateforme est distinct des clips de fixation de la platine de commande sur la plateforme de la plateforme du panneau d'habillage du garnissage de la porte latérale. A contrario, l'organe de retenue est un élément qui contribue à retenir en position la platine de commande lorsque les clips de fixation de la platine de commande sur la plateforme ne coopèrent plus correctement avec les éléments de retenue situés en regard sur la plateforme. En outre, l'organe de retenue collabore avec la platine de commande de manière à empêcher que celle-ci ne s'escamote hors de la plateforme en cas de choc latéral. à cet effet, l'organe de retenue est avantageusement placé contre ou en regard d'une face de la platine de commande, de manière à former une interface de retenue, c'est-à-dire une butée d'arrêt, pour la face de la platine de commande en cas de choc latéral.

A cet effet, et de manière tout à fait astucieuse, l'invention prévoit d'utiliser un organe de retenue élastiquement déformable afin de pouvoir demeurer fonctionnel malgré les déformations du garnissage consécutivement à un choc latéral. en d'autres termes, en cas de choc latéral, la déformation du garnissage de la porte latérale - conduisant à une moindre efficacité de la fixation de la platine de commande sur la plateforme - est compensé par la présence de l'organe de retenue qui, en pouvant se déformer, va demeurer en position et maintenir la platine de commande dans son logement, c'est-à-dire dans le réceptacle de la plateforme. Le caractère élastique est utilisé ici pour garantir l'interaction entre l'organe de retenue et la platine de commande malgré les intrusions induites par le choc latéral.

Ainsi, le module lève-vitre résout le problème technique en ce qu'il permet d'éviter que la platine de commande ne se désolidarise hors de la plateforme à laquelle elle était rattachée, suite à un choc latéral. L'organe de retenue est additionnel aux moyens de fixation connus de la platine de commande sur la plateforme du garnissage de porte latérale, renforçant ainsi la sécurité des passagers du véhicule automobile. En outre, l'invention est facile à mettre en œuvre car elle peut être déployée sur des platines de commande existantes : en ajoutant au garnissage de porte latéral l'organe de retenue prévue ici, il est possible de mettre en œuvre l'invention par une simple adaptation des modules lève-vitre existants. Ainsi, l'invention est facile à déployer et propose une solution économique.

Le module lève-vitre conforme au premier aspect de l'invention comprend avantageusement au moins un des perfectionnements ci-dessous, les caractéristiques techniques formant ces perfectionnements pouvant être prises seules ou en combinaison :
- l'organe de retenue comporte au moins une lame ressort. L'au moins une lame ressort prend la forme d'une lame rectiligne qui s'étend suivant un axe d'élongation propre, ladite au moins une lame ressort étant configurée pour être flexible dans une première direction perpendiculaire à l'axe d'élongation propre, et pour être plus rigide dans une deuxième direction perpendiculaire à l'axe d'élongation propre, ladite au moins une lame ressort s'étendant en travers de la platine de commande selon la première direction propre. En d'autres termes, la première direction propre est ici prise suivant l'axe transversal, et la deuxième direction propre est prise suivant l'axe vertical. Cette configuration avantageuse permet ainsi de bénéficier de la capacité de flexion de la lame ressort suivant l'axe transversal, autorisant ainsi une disponibilité fonctionnelle malgré l'enfoncement de la paroi de porte en cas de choc latéral. En effet, dans une telle situation, la lame ressort va fléchir et se courber, selon la nature de la déformation du garnissage de porte mais, elle s'étendra toujours au-dessus et/ou en travers de la platine de commande, de sorte à continuer de collaborer avec elle pour la retenir contre la plateforme. En outre dans la deuxième direction propre, c'est-à-dire l'axe vertical, la lame ressort est bien plus rigide, puisque prise dans la hauteur de ladite lame ressort. Ainsi, cette rigidité est exploitée pour s'opposer à l'escamotage de la platine de commande hors de la plateforme : en mettant la lame ressort en appui contre la platine de commande - ou placée sensiblement en regard de la platine de commande, la rigidité de la lame ressort suivant l'axe vertical vient suppléer les clips de fixation de la platine de commande sur la plateforme, qui auront peut être cédé sous l'effet du choc latéral ;
- l'au moins une lame ressort est fixée à chacune de ses extrémités au panneau d'habillage, une partie médiane de ladite lame ressort située entre les deux extrémités s'étendant en travers de la platine de commande. Ainsi, la lame ressort s'étend suivant l'axe d'élongation propre et est fixée uniquement par ses extrémités longitudinales au panneau d'habillage. Bien entendu, la fixation de la lame ressort contre le panneau d'habillage est réalisé à proximité de la platine de commande, et de manière telle que la lame ressort s'étende en regard et/ou en dessus et/ou contre la platine de commande. La fixation des extrémités de la lame ressort sur le panneau d'habillage du garnissage de porte latérale peut être réalisé par tout moyen, tel que par clipsage, par soudage, par collage ou par vissage par exemple ;
- de manière avantageuse, l'au moins une lame ressort est montée de manière « bandée » sur le panneau d'habillage, de sorte que, entre ses deux extrémités fixées au panneau d'habillage, ladite lame ressort s'étend de manière non rectiligne : une longueur de l'au moins une lame ressort est supérieure à la distance des points de fixation de chacune de ses extrémités sur le panneau d'habillage. En d'autres termes, dans une configuration montée, l'au moins une lame ressort s'étend de manière courbée en travers de la platine de commande. En d'autres termes encore, l'au moins une lame ressort est précontrainte dans cette configuration montée ;
- l'au moins une lame ressort s'étend en regard d'une embase ou d'une face parallèle à l'embase de la platine de commande, ladite embase obturant le réceptacle de la plateforme du garnissage de porte latérale. Dans le contexte de la présente invention, l'embase forme une paroi de fermeture du réceptacle de la plateforme. L'embase est par exemple formée d'une plaque en plastique sur laquelle le ou les boutons de commande sont montés. L'embase s'étend de manière sensiblement horizontale sur la plateforme lorsque le module lève-vitre est assemblé sur un véhicule automobile ;
- avantageusement, les extrémités de l'au moins une lame ressort sont situées chacune à proximité d'un bord longitudinal de la platine de commande. Cette configuration avantageuse permet de faciliter et d'optimiser l'interaction entre l'au moins une lame ressort et la platine de commande en cas de choc latéral. dans le contexte de la présente invention, le bord longitudinal de la platine de commande est un bord situé du côté du panneau d'habillage et qui s'étend majoritairement suivant l'axe longitudinal. En particulier, les extrémités de l'au moins une lame ressort sont situées de part et d'autre du bouton de contrôle de la platine de commande, relativement à un axe longitudinal du module lève-vitre ;
- selon une première variante de réalisation, l'au moins une lame ressort est formée d'un matériau composite. Selon une deuxième variante de réalisation, l'au moins une lame ressort est formée d'un matériau métallique ;
- préférentiellement, l'au moins une lame ressort est du type d'un ressort à lames. En d'autres termes, chaque au moins une lame ressort comporte une pluralité de lames accolées les unes contre les autres, chacune desdites lames étant flexible dans une direction correspondant à son épaisseur, lesdites lames étant accolées les unes contre les autres suivant une direction parallèle à leur épaisseur. Dans le contexte de la présente invention, on comprend qu'une lame est formée d'une feuille - métallique ou composite par exemple - de forme rectangulaire, de grande longueur - prise selon l'axe longitudinal - de moindre largeur - prise selon l'axe vertical - et de très faible épaisseur - prise selon l'axe transversal. A titre d'exemple non limitatif, la longueur d'une telle lame est au moins supérieure à quatre fois la largeur de ladite lame, et l'épaisseur de la lame est au moins inférieure à dix fois sa largeur. Cette configuration avantageuse permet de fournir l'effet flexible recherché suivant l'axe transversal, tout en bénéficiant d'une grande rigidité suivant l'axe vertical ;
- la platine de commande comporte une butée située en regard de l'au moins une lame ressort. De manière avantageuse, la butée est configurée pour pouvoir collaborer avec la lame ressort, au moins suite à un choc latéral. Cependant, l'invention prévoit aussi que l'au moins une lame ressort puisse être adossée contre la butée dans une configuration normale d'utilisation. La butée est située en regard et vers l'intérieur par rapport à l'au moins une lame ressort, relativement à l'axe transversal.
   -- selon une variante de réalisation préférée de l'invention, l'au moins une lame ressort du module lève-vitre comporte (i) une première lame ressort dont des extrémités sont fixées solidairement au panneau d'habillage, lesdites extrémités étant situées à proximité de bords longitudinaux de la platine de commande, et (ii) une deuxième lame ressort dont des extrémités sont fixées solidairement au panneau d'habillage, lesdites extrémités de la deuxième lame ressort étant situées entre les extrémités de la première lame ressort. La deuxième lame ressort est distincte de la première lame ressort. La deuxième lame ressort s'étend entre la première lame ressort et le panneau d'habillage du garnissage de porte. Cette configuration est particulièrement avantageuse car elle permet d'adresser des profils d'intrusion beaucoup plus importants de la porte latérale, c'est-à-dire une plus grande variété de profils. La première lame ressort est préférentiellement du type d'un ressort à lames composite, tandis que la deuxième lame ressort est préférentiellement du type d'un ressort à lames interne ;
- la première lame ressort et la deuxième lame ressort sont éventuellement liées entre elles. En particulier, la première lame ressort et la deuxième lame ressort sont éventuellement reliées entre elle au niveau de leur partie médiane. Par « relié », on comprend qu'elles sont attachées l'une à l'autre au niveau de leur partie médiane, c'est-à-dire à distance de leurs extrémités respectives, par exemple par un serre-clip, un lien.

Selon un deuxième aspect de l'invention, il est proposé un véhicule automobile comportant une porte latérale associée à un module lève-vitre conforme au premier aspect de l'invention ou selon l'un quelconque de ses perfectionnements.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue générale du module lève-vitre selon l'invention ;
[Fig.2] illustre une vue de détail et du dessus d'un premier exemple de réalisation d'un module lève-vitre conforme au premier aspect de l'invention et dans une configuration d'utilisation normale ;
[Fig.3] illustre une vue de détail et en perspective du module lève-vitre illustré sur la FIGURE 2 ;
[Fig.4] illustre une vue de détail et du dessus du module lève-vitre illustré sur la FIGURE 1 et dans une configuration consécutive à un choc latéral ;
[Fig.5] illustre une vue de détail et du dessus d'un deuxième exemple de réalisation d'un module lève-vitre conforme au premier aspect de l'invention et dans une configuration d'utilisation normale ;
[Fig.6] illustre une vue de détail et en perspective du module lève-vitre illustré sur la FIGURE 5 ;
[Fig.7] illustre une vue de détail et du dessus du module lève-vitre illustré sur la FIGURE 5 et dans une configuration consécutive à un choc latéral.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Dans les FIGURES décrites ci-après, on définit un axe longitudinal X, un axe latéral et un axe vertical Z relativement au véhicule automobile sur lequel le module lève-vitre 1 selon l'invention est destiné à être monté.

Plus particulièrement, l'axe transversal Y s'entend comme une direction prise entre un côté latéral du véhicule automobile et un côté latéral opposé dudit véhicule automobile. En d'autres termes, l'axe transversal Y s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal Y.

En outre, l'axe longitudinal X s'entend comme étant pris le long d'une direction qui s'étend d'avant en arrière ou d'arrière en avant du véhicule automobile. L'axe longitudinal X est perpendiculaire à l'axe transversal Y. Les adjectifs frontaux, avant et arrière font référence à cet axe longitudinal X.

Enfin, l'axe vertical Z s'entend comme étant pris le long d'un axe qui s'étend depuis les roues du véhicule automobile et vers le pavillon de toit dudit véhicule automobile, ou inversement, l'axe vertical Z étant simultanément perpendiculaire à l'axe transversal Y et à l'axe longitudinal X. Les adjectifs dessus et dessous, ou inférieur et supérieur font référence à cet axe vertical Z.

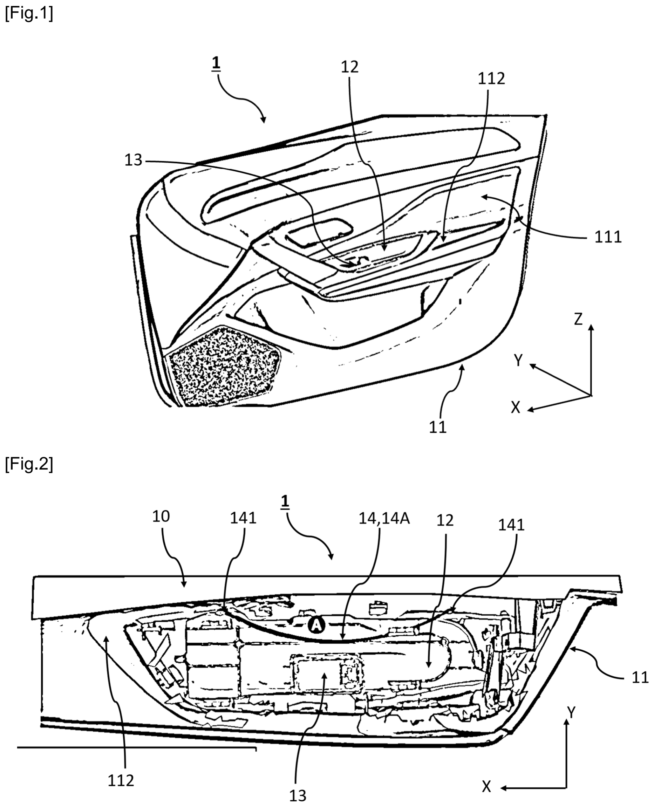

En référence aux FIGURES 1 à 7, l'invention adresse un module lève-vitre 1 pour un véhicule automobile, le module de commande comportant :
- un garnissage 11 de porte latérale fixé solidairement à une doublure de porte 10 de ladite porte latérale, le garnissage 11 comportant un panneau d'habillage 111 de la doublure de porte 10 et une plateforme 112 qui s'étend en saillie depuis le panneau d'habillage 111, la plateforme 112 comportant un réceptacle formant un logeant pour recevoir un mécanisme de contrôle d'une vitre de la porte latérale ;
- une platine de commande 12 logée dans le réceptacle de la plateforme 112, la platine de commande 12 intégrant un bouton de contrôle 13 de la vitre de la porte latérale, ladite platine de commande 12 comportant des moyens de fixation sur la plateforme 112 ;
- un organe de retenue 14 de la platine de commande 12 dans le réceptacle de la plateforme 112, ledit organe de retenue 14 étant du type élastiquement déformable et s'étendant depuis le panneau d'habillage 111 et contre la platine de commande 12, en travers du réceptacle.

Le module lève-vitre 1 selon l'invention peut être intégré dans une porte latérale avant ou une porte latérale arrière d'un véhicule automobile.

Le module lève-vitre 1 selon l'invention permet de retenir la platine de commande 12 contre la plateforme 112 du garnissage 11 de porte latérale, c'est-à-dire dans son réceptacle auquel elle est fixée par les moyens de fixation - typiquement des crochets d'ancrage. Plus particulièrement, l'invention prévoit d'ajouter l'organe de retenue 14, indépendamment des moyens de fixation de la platine de commande 12 sur le garnissage 11 de porte latérale. En outre, l'organe de retenue 14 est élastiquement déformable afin de pouvoir demeurer fonctionnel, c'est-à-dire de continuer à fournir la fonction de retenue de la platine de commande 12 dans son réceptacle, même en cas de choc latéral INTR contre la porte latérale à laquelle le module lève-vitre 1 est associé.

Aussi, lors de son montage, l'organe de retenue 14 est élastiquement contraint afin d'être assemblé sur le garnissage 11. Cette configuration avantageuse permet d'exploiter les forces élastiques générées par la conformation contrainte de l'organe de retenue 14, sur la platine de commande 12, afin de la maintenir en position. Lors de son montage, et en l'absence de choc latéral INTR, l'organe de retenue 14 applique éventuellement déjà une telle force contre la platine de commande 12 afin de la plaquer contre et/ou maintenir dans le réceptacle du garnissage 11.

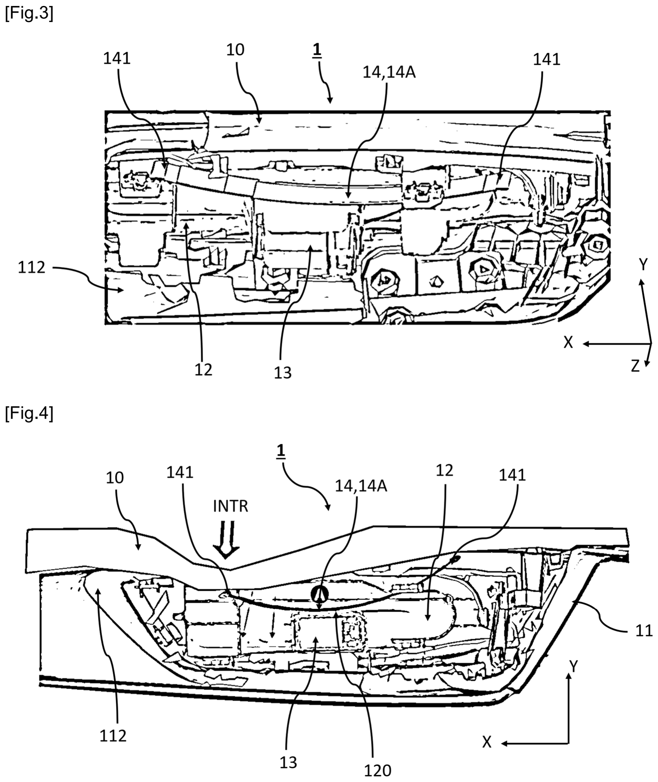

Alternativement, selon une autre variante de réalisation préférée de l'invention :
- lors de son montage, et en l'absence de choc latéral INTR, l'organe de retenue 14 n'applique pas une telle force contre la platine de commande 12. Cette configuration nominale est illustrée sur les FIGURES 2 et 3 d'une part, et 5 et 6 d'autre part ;
- lorsqu'un choc latéral INTR intervient contre la porte latérale, les intrusions de la doublure de porte 10 vers l'intérieur de l'habitacle conduisent à solliciter l'organe de retenue 14 qui se met alors à produire une telle force pour plaquer la platine de commande 12 contre et/ou la maintenir dans le réceptacle du garnissage 11. Cette configuration consécutive d'un choc latéral INTR est illustrée sur les FIGURES 4 d'une part, et 7 d'autre part. Dans cette configuration consécutive d'un choc latéral INTR, l'organe de retenue 14 est avantageusement mis en appui contre une butée 120 située en regard sur la platine de commande 12.

Comme visible sur les FIGURES 1 à 7, l'application de cette force est majoritairement orientée suivant l'axe vertical Z et/ou suivant l'axe transversal Y, préférentiellement.

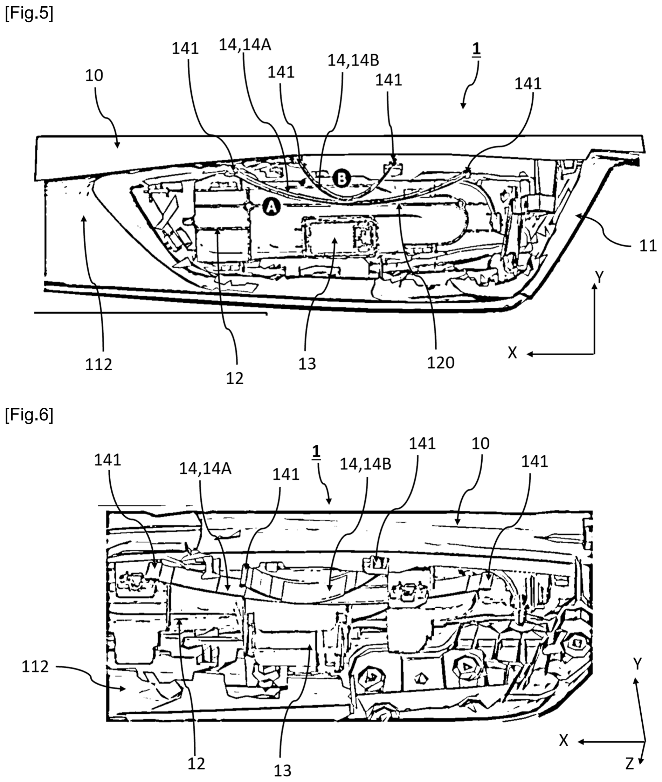

D'une manière générale, l'organe de retenue 14 comporte au moins une lame ressort 14A, 14B. Comme visible sur les FIGURES 3 et 6, chaque lame ressort 14A, 14B prend la forme d'une lame rectiligne qui s'étend suivant un axe d'élongation propre, ladite lame ressort 14A, 14B étant configurée pour être flexible dans une première direction perpendiculaire à l'axe d'élongation propre, c'est-à-dire l'axe transversal Y sur les FIGURES, et pour être plus rigide dans une deuxième direction perpendiculaire à l'axe d'élongation propre, c'est-à-dire l'axe vertical Z sur les FIGURES. Chaque lame ressort 14A, 14B s'étendant en travers de la platine de commande 12 selon l'axe transversal Y, de manière courbée.

Dans les configurations illustrées sur les FIGURES 2 et 3 d'une part, et 5 et 6 d'autre part, les lames ressort 14A, 14B présentent une forme courbe, en arc de cercle ou en arc d'ellipse, et sont situées à distance d'une butée 120 de la platine de commande 12 située en regard, relativement à l'axe transversal Y.

Chaque lame ressort 14A, 14B prend la forme d'une ou plusieurs feuilles rectangulaires qui sont accolées les unes contre les autres, de sorte à former un profil d'épaisseur variable - mesurée suivant l'axe transversal Y - en fonction d'une position longitudinale, mesurée suivant l'axe longitudinal X : la lame ressort 14A, 14B est plus épaisse au niveau d'une partie médiane plutôt qu'à proximité de ses extrémités 141 longitudinales. Cette configuration avantageuse permet de fournir à moindre coût un caractère flexible à la lame ressort 14A, 14B, suivant l'axe transversal Y.

Chaque lame ressort 14A, 14B est fixée à chacune de ses extrémités 141 au panneau d'habillage 111, une partie médiane de ladite lame ressort 14A, 14B située entre les deux extrémités 141 s'étendant en travers de la platine de commande 12. La fixation des extrémités 141 longitudinales de la lame ressort 14A, 14B contre le panneau d'habillage 111 est réalisé à proximité de la platine de commande 12, et de manière telle que la lame ressort 14A, 14B s'étende en regard et/ou en dessus et/ou contre la platine de commande 12. Dans les exemples de réalisation illustrés sur les FIGURES, les extrémités 141 longitudinales de la lame ressort 14A, 14B comportent des protrusions qui sont insérées dans des logement d'accueil aménagés sur le panneau d'habillage 111. Les logements d'accueil sont par exemple formés de deux ergots distants l'un de l'autre et permettant à la lame ressort 14A, 14B d'être insérée sans pour autant que les protrusions de ladite lame ressort 14A, 14B ne puissent passer au travers de la fente formée par les deux ergots.

Chaque lame ressort 14A, 14B s'étend au-dessus d'au moins une partie de la platine de commande 12, relativement à l'axe vertical Z. Eventuellement, chaque lame ressort 14A, 14B s'étend au-dessus d'une face supérieure de la platine de commande 12, celle sur laquelle les boutons de commande sont disposés. Alternativement, la platine de commande 12 comporte une rainure ou une cavité située en-dessous de la face supérieure, et chaque lame ressort 14A, 14B s'étend dans et au travers de ladite rainure ou de ladite cavité. Dans l'un ou l'autre des cas, la platine de commande 12 comporte une butée 120 qui s'étend en regard de chaque lame ressort 14A, 14B, de sorte à former une surface d'appui contre ladite lame ressort 14A, 14B au moins lorsqu'un choc latéral INTR intervient et que la doublure de porte 10 s'enfonce vers l'intérieur de l'habitacle, relativement à l'axe transversal Y.

Les FIGURES 2 à 4 illustrent un premier mode de réalisation de l'invention, dans lequel la platine de commande 12 est retenue sur la plateforme 112 par une seule lame ressort 14A.

Dans ce premier mode de réalisation, la lame ressort 14A est fixée solidairement au panneau d'habillage 111, du côté de la doublure de porte 10. Les extrémités 141 longitudinales de la lame ressort 14A sont situées suivant l'axe longitudinal X : une première extrémité 141 longitudinale est située en arrière d'une deuxième extrémité 141 longitudinale. En outre, la distance, mesurée suivant l'axe longitudinal X, entre les deux extrémités 141 longitudinales de la lame ressort 14A est inférieure à la longueur de la lame ressort 14A. Par conséquent, la lame ressort 14A s'étend ainsi de manière courbe vers l'intérieur de l'habitacle, suivant l'axe transversal Y. La lame ressort 14A s'étend entre le panneau d'habillage 111 et le bouton de commande de la platine de commande 12.

Comme visible sur la FIGURE 4, lorsqu'un choc latéral INTR intervient, l'intrusion vers l'intérieur de la doublure de porte 10 latérale conduit à plaquer la lame ressort 14A contre la butée 120 de la platine de commande 12. Plus particulièrement, c'est l'extrémité 141 longitudinale de la lame ressort 14A qui est située en regard de l'intrusion qui est poussée vers l'intérieur de l'habitacle, suivant l'axe transversal Y. Cette poussée vers l'intérieur conduit à plaquer la lame ressort 14A contre la butée 120 située en regard. Plus l'intrusion est forte, et plus la lame ressort 14A est mise en tension, bloquant ainsi davantage encore la platine de commande 12 dans la plateforme 112 associée.

Ainsi, cette configuration simplifiée de l'invention, à une seule lame ressort 14A, permet de renforcer le module lève-vitre 1 de manière économique.

Les FIGURES 5 à 7 illustrent un deuxième mode de réalisation de l'invention dans lequel la platine de commande 12 est retenue sur la plateforme 112 par deux lames ressort 14A, 14B. Ce deuxième mode de réalisation est plus perfectionné mais conduit à de meilleures performances car il permet de répondre favorablement à des profils d'intrusion plus variés. En d'autres termes, si l'enfoncement de la doublure de porte 10 s'opère en plusieurs positions longitudinales de la porte latérale, alors cette variante de réalisation du module lève-vitre 1 réagira plus favorablement en ce que le déplacement des extrémités 141 des deux lames ressort 14A, 14B les mettront en tension et plaqueront davantage la platine de commande 12 dans la plateforme 112 du garnissage 11.

Dans ce deuxième mode de réalisation, chaque lame ressort est fixée solidairement au panneau d'habillage 111, du côté de la doublure de porte 10. Les extrémités 141 longitudinales des deux lames ressort 14A, 14B sont situées suivant l'axe longitudinal X : une première extrémité 141 longitudinale est située en arrière d'une deuxième extrémité 141 longitudinale. En outre, la distance, mesurée suivant l'axe longitudinal X, entre les deux extrémités 141 longitudinales de chaque lame ressort est inférieure à la longueur de ladite lame ressort, de sorte que ladite lame ressort s'étend ainsi de manière courbe vers l'intérieur de l'habitacle, suivant l'axe transversal Y.

En particulier le module lève-vitre 1 comporte :
- une première lame ressort 14A dont des extrémités 141 longitudinales sont fixées solidairement au panneau d'habillage 111, lesdites extrémités 141 longitudinales étant situées à proximité de bords longitudinaux de la platine de commande 12, et notamment à proximité d'un bord avant et d'un bord arrière de ladite platine de commande 12 ;
- une deuxième lame ressort 14B dont des extrémités 141 longitudinales sont fixées solidairement au panneau d'habillage 111, lesdites extrémités 141 longitudinales de la deuxième lame ressort 14B étant situées entre les extrémités 141 de la première lame ressort 14A. La deuxième lame ressort 14B est distincte de la première lame ressort 14A. La deuxième lame ressort 14B s'étend entre la première lame ressort 14A et le panneau d'habillage 111 du garnissage 11 de porte.

La première lame ressort 14A s'étend entre le panneau d'habillage 111 et la butée 120 de la platine de commande 12 située à proximité du bouton de commande. La deuxième s'étend entre le panneau d'habillage 111 et la première lame ressort 14A.

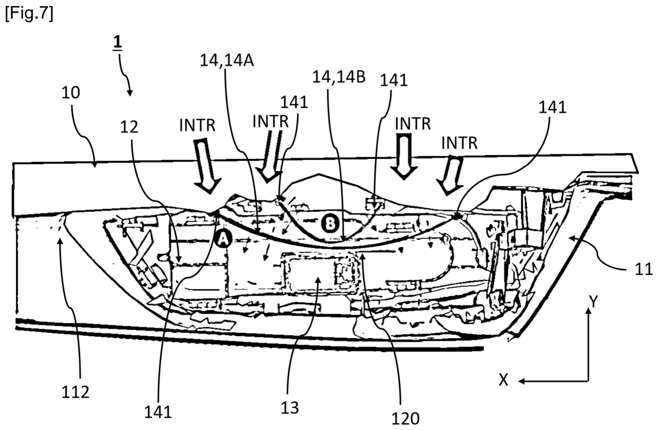

Comme visible sur la FIGURE 7, lorsqu'un choc latéral INTR intervient, l'intrusion vers l'intérieur de la doublure de porte 10 latérale conduit à plaquer la première lame ressort 14A contre la butée 120 de la platine de commande 12, tandis que la deuxième lame ressort 14B est elle-aussi poussée vers l'intérieur de l'habitacle, en direction dudit bouton de commande et de ladite butée 120. Plus particulièrement, c'est l'extrémité 141 longitudinale de chaque lame ressort qui est située en regard de l'intrusion qui est poussée vers l'intérieur de l'habitacle, suivant l'axe transversal Y. Plus l'intrusion est forte, et plus les lames ressort 14A, 14B sont mises en tension, bloquant ainsi davantage encore la platine de commande 12 dans la plateforme 112 associée.

En synthèse, l'invention concerne un module lève-vitre 1 pour un véhicule automobile, le module de commande comportant un garnissage 11 de porte latérale fixé solidairement à une doublure de porte 10 de ladite porte latérale, le garnissage 11 comportant un panneau d'habillage 111 et une plateforme 112 qui s'étend en saillie depuis le panneau d'habillage 111, la plateforme 112 logeant une platine de commande 12 intégrant un bouton de contrôle 13 de la vitre de la porte latérale, ladite platine de commande 12 comportant des moyens de fixation sur la plateforme 112. Selon l'invention, le module lève-vitre 1 comporte un organe de retenue 14 de la platine de commande 12 dans le réceptacle de la plateforme 112, ledit organe de retenue 14 étant du type élastiquement déformable de sorte à être mis en tension et en appui contre une butée 120 de la platine de commande 12 en cas de choc latéral INTR et afin de la retenir sur la plateforme 112.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux. ]

## Revendications

1. Module lève-vitre (1) pour un véhicule automobile, le module lève-vitre (1) comportant :
- un garnissage (11) de porte latérale fixé solidairement à une doublure de porte (10) de ladite porte latérale, le garnissage (11) comportant un panneau d'habillage (111) de la doublure de porte (10) et une plateforme (112) qui s'étend en saillie depuis le panneau d'habillage (111), la plateforme (112) comportant un réceptacle formant un logement pour recevoir un mécanisme de contrôle d'une vitre de la porte latérale ;
- une platine de commande (12) logée dans le réceptacle de la plateforme (112), la platine de commande (12) intégrant un bouton de contrôle (13) de la vitre de la porte latérale, ladite platine de commande (12) comportant des moyens de fixation sur la plateforme (112) ;
**caractérisé en ce que** le module lève-vitre (1) comporte un organe de retenue (14) de la platine de commande (12) dans le réceptacle de la plateforme (112), ledit organe de retenue (14) étant du type élastiquement déformable et s'étendant depuis le panneau d'habillage (111) et contre la platine de commande (12), en travers du réceptacle.

2. Module lève-vitre (1) selon la revendication précédente, dans lequel l'organe de retenue (14) comporte au moins une lame ressort (14A, 14B).

3. Module lève-vitre (1) selon la revendication précédente, dans lequel l'au moins une lame ressort (14A, 14B) est fixée à chacune de ses extrémités (141) au panneau d'habillage (111), une partie médiane de ladite lame ressort (14A, 14B) située entre les deux extrémités (141) s'étendant en travers de la platine de commande (12).

4. Module lève-vitre (1) selon la revendication précédente, dans lequel, dans une configuration montée, l'au moins une lame ressort (14A, 14B) s'étend de manière courbée en travers de la platine de commande (12).

5. Module lève-vitre (1) selon l'une quelconque des revendications 2 à 4, dans lequel l'au moins une lame ressort (14A, 14B) s'étend en regard d'une embase ou d'une face parallèle à l'embase de la platine de commande (12), ladite embase obturant le réceptacle de la plateforme (112) du garnissage (11) de porte latérale.

6. Module lève-vitre (1) selon l'une quelconque des revendications 2 à 5, dans lequel l'au moins une lame ressort (14A, 14B) est du type d'un ressort à lames.

7. Module lève-vitre (1) selon l'une quelconque des revendications 2 à 6, dans lequel la platine de commande (12) comporte une butée (120) située en regard de l'au moins une lame ressort (14A, 14B).

8. Module lève-vitre (1) selon l'une quelconque des revendications 3 à 7, dans lequel les extrémités (141) de l'au moins une lame ressort (14A, 14B) sont situées de part et d'autre du bouton de contrôle (13) de la platine de commande (12), relativement à un axe longitudinal (X) du module lève-vitre (1).

9. Module lève-vitre (1) selon l'une quelconque des revendications 3 à 8, dans lequel l'au moins une lame ressort (14A, 14B) du module lève-vitre (1) comporte :
- une première lame ressort (14A) dont des extrémités (141) sont fixées solidairement au panneau d'habillage (111), lesdites extrémités (141) étant situées à proximité de bords longitudinaux de la platine de commande (12) ; et
- une deuxième lame ressort (14B) dont des extrémités (141) sont fixées solidairement au panneau d'habillage (111), lesdites extrémités (141) de la deuxième lame ressort (14B) étant situées entre les extrémités (141) de la première lame ressort (14A).

10. Véhicule automobile comportant une porte latérale associée à un module lève-vitre (1) selon l'une quelconque des revendications précédentes. ]
